# EUROPÄISCHE PATENTSCHRIFT

(11) **EP 3 268 327 B1**
(45) Veröffentlichungstag und Bekanntmachung des Hinweises auf die Patenterteilung: **18.08.2021**
(21) Anmeldenummer: 16707793.2
(22) Anmeldetag: 03.03.2016
(51) Int. Cl.: C04B 28/04, C04B 40/00, C08J 3/12, C08K 3/34, C04B 103/40

(54) **VERFAHREN ZUR HERSTELLUNG EINES DISPERGIERMITTELS**
METHOD FOR PREPARING A DISPERSANT
PROCÉDÉ DE FABRICATION D'UN DISPERSANT

(30) Priorität: 13.03.2015 EP 15158957
(43) Veröffentlichungstag der Anmeldung: 17.01.2018
(73) Patentinhaber: BASF SE, 67056 Ludwigshafen am Rhein (DE)
(72) Erfinder: GAEDT, Torben, 83278 Traunstein (DE); DENGLER, Joachim, 83342 Tacherting (DE); WINKLBAUER, Martin, 84553 Halsbach (DE); BICHLER, Manfred, 84549 Engelsberg (DE); MAZANEC, Oliver, 83022 Rosenheim (DE)
(74) Vertreter: BASF IP Association
(86) Internationale Anmeldenummer: PCT/EP2016/054573
(87) Internationale Veröffentlichungsnummer: WO 2016/146402

(56) Entgegenhaltungen:
- WO-A1-03/097721
- WO-A1-2007/071361
- CN-A- 101 962 273
- DE-A1- 19 905 488
- JP-A- H06 239 652
- JP-A- 2001 294 463
- JP-A- 2002 193 648

## Beschreibung

Die Erfindung betrifft ein Verfahren zur Herstellung eines Dispergiermittels. Weiterhin beschrieben wird die Verwendung des Dispergiermittels für eine anorganische Bindemittelzusammensetzung.

Um eine verbesserte Verarbeitbarkeit, d. h. Knetbarkeit, Streichfähigkeit, Spritzbarkeit, Pumpbarkeit oder Fließfähigkeit, anorganischer Feststoffsuspensionen zu erreichen, werden diesen oft Zusatzmittel in Form von Dispergier- oder Fließmitteln zugesetzt.

Derartige anorganische Feststoffe umfassen in der Bauindustrie meistens anorganische Bindemittel wie z.B. Zement auf Basis Portlandzement (EN 197), Zement mit besonderen Eigenschaften (DIN 1164), Weißzement, Calciumaluminatzement bzw. Tonerdezement (EN 14647), Calciumsulfoaluminatzement, Spezialzemente, Calciumsulfat-n-Hydrat (n=0 bis 2), Kalk bzw. Baukalk (EN 459) sowie Puzzolane bzw. latent hydraulische Bindemittel wie z. B. Flugasche, Metakaolin, Silicastaub, Hüttensand. Weiterhin enthalten die anorganischen Feststoffsuspensionen in der Regel Füllstoffe, insbesondere Gesteinskörnung bestehend aus z. B. Calciumcarbonat, Quarz oder anderen natürlichen Gesteinen verschiedener Korngröße und Kornform sowie weitere anorganische und/oder organische Additive (Zusatzmittel) zur gezielten Beeinflussung von Eigenschaften bauchemischer Produkte z. B. Hydratationskinetik, Rheologie oder Luftgehalt. Außerdem können organische Bindemittel wie z. B. Latexpulver enthalten sein.

Um Baustoffmischungen, insbesondere auf Basis von anorganischen Bindemitteln in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Baukörper führt zu einer signifikant verschlechterten mechanischen Festigkeit, Beständigkeit und Dauerhaftigkeit.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen in der Bauchemie als Wasserreduktions- oder Fließmittel bezeichnet werden. Als derartige Mittel sind vor allem Polykondensationsprodukte auf Basis von Naphthalin- oder Alkylnaphthalinsulfonsäuren bzw. Sulfonsäuregruppen enthaltende Melamin-Formaldehydharze bekannt.

DE 3530258 beschreibt die Verwendung von wasserlöslichen Natriumnaphthalinsulfonsäure-Formaldehydkondensaten als Zusatzmittel für anorganische Bindemittel und Baustoffe. Diese Zusatzmittel werden zur Verbesserung der Fließfähigkeit der Bindemittel wie z. B. Zement, Anhydrit oder Gips sowie den damit hergestellten Baustoffen beschrieben.

DE 2948698 beschreibt hydraulische Mörtel für Estriche, die Fließmittel auf Basis von Melamin-Formaldehyd-Kondensationsprodukten und/oder sulfonierte Formaldehyd-Naphthalinkondensate und/oder Ligninsulfonat und als Binder Portlandzement, tonhaltiger Kalkmergel, Ton- und Schwachbrandklinker enthalten.

Neben den rein anionischen Fließmitteln, die im wesentlichen Carbonsäure- und Sulfonsäuregruppen enthalten, werden als neuere Gruppe von Fließmitteln schwach anionische Kammpolymere beschrieben, die üblicherweise anionische Ladungen an der Hauptkette tragen und nichtionische Polyalkylenoxidseitenketten enthalten.

WO 01/96007 beschreibt diese schwach anionischen Fließ- und Mahlhilfsmittel für wässrige Mineralsuspensionen, die durch radikalische Polymerisation von Vinylgruppen enthaltenden Monomeren hergestellt werden und die als eine Hauptkomponente Polyalkylenoxidgruppen enthalten.

DE 19513126 und DE 19834173 beschreiben Copolymere auf Basis von ungesättigten Dicarbonsäurederivaten und Oxyalkylenglykol-Alkenylethern und deren Verwendung als Zusatzmittel für hydraulische Bindemittel, insbesondere Zement.

Ziel der Zugabe von Fließmitteln in der Bauindustrie ist entweder die Plastizität des Bindemittelsystems zu erhöhen oder die benötigte Wassermenge bei gleichen Verarbeitungsbedingungen zu reduzieren.

Es hat sich gezeigt, dass Fließmittel auf Basis von Ligninsulfonat, Melaminsulfonat und Polynaphthalinsulfonat den schwach anionischen, polyalkylenoxidhaltigen Copolymeren in ihrer Wirksamkeit deutlich unterlegen sind. Diese Copolymere werden auch als Polycarboxylatether (PCE) bezeichnet. Polycarboxylatether dispergieren die anorganischen Partikel nicht nur über elektrostatische Aufladung aufgrund der an der Hauptkette enthaltenen anionischen Gruppen (Carboxylatgruppen, Sulfonatgruppen), sondern stabilisieren zusätzlich die dispergierten Teilchen durch sterische Effekte aufgrund der Polyalkylenoxid-Seitenketten, die durch Absorption von Wassermolekülen eine stabilisierende Schutzschicht um die Partikel bilden.

Dadurch kann entweder die benötige Menge Wasser für das Einstellen einer bestimmten Konsistenz gegenüber den klassischen Fließmitteln reduziert werden oder aber die Plastizität der feuchten Baustoffmischung wird durch die Zugabe der Polycarboxylatether so weit reduziert, dass selbstverdichtender Beton oder selbstverdichtender Mörtel bei niedrigen Wasser/Zement-Verhältnissen hergestellt werden kann. Auch ermöglicht die Verwendung der Polycarboxylatether die Herstellung von Transportbeton oder Transportmörtel, der über längere Zeiträume pumpbar bleibt oder die Herstellung von hochfesten Betonen oder hochfesten Mörteln durch die Einstellung eines niedrigen Wasser/Zement-Verhältnisses.

Neben den beschriebenen Polycarboxylatethern sind inzwischen auch eine Reihe von Derivaten mit modifiziertem Wirkungsprofil bekannt. So beschreibt beispielsweise die US 2009312460 Polycarboxylatester, wobei die Esterfunktion nach Einbringen in eine zementäre, wässrige Mischung hydrolysiert wird und hierdurch ein Polycarboxylatether gebildet wird. Polycarboxylatester haben den Vorteil, dass sie ihre Wirkung erst nach einiger Zeit in der zementären Mischung entfalten und hierdurch die dispergierende Wirkung über einen längeren Zeitraum aufrechterhalten werden kann.

Dispergiermittel auf Basis von Polycarboxylatethern und deren Derivate werden entweder als Feststoff in Pulverform oder als wässrige Lösung angeboten. Pulverförmige Polycarboxylatether können beispielsweise einem Werktrockenmörtel bei dessen Herstellung zugemischt werden. Beim Anmachen des Werktrockenmörtels mit Wasser lösen sich die Polycarboxylatether und können nachfolgend ihre Wirkung entfalten.

Aus der DE 199 05 488 sind pulverförmige Polymerzusammensetzungen auf Basis von Polyethercarboxylaten bekannt, wobei diese 5 bis 95 Gew.-% des wasserlöslichen Polymers und 5 bis 95 Gew.-% eines feinteiligen mineralischen Trägermaterials umfassen. Die Produkte werden durch in Kontakt bringen des mineralischen Trägermaterials mit einer Schmelze oder einer wässrigen Lösung des Polymers hergestellt. Als Vorteile dieses Produktes wird im Vergleich zu sprühgetrockneten Produkten eine deutlich erhöhte Verklebungs- und Verbackungsresistenz genannt.

Weiterhin offenbart die JP 2001294463 ein pulverförmiges Dispergiermittel für zementäre Systeme auf Basis von Polycarboxylatethern, welches durch Zugabe eines anorganischen Pulvers in seiner Fließfähigkeit verbessert wird. Als anorganisches Pulver wird unter anderem auch Kaolinit offenbart. Das Vermischen des pulverförmigen Dispergiermittels mit dem anorganischen Pulver wird auf verschiedene Weise beschrieben. Hierbei wird auch offenbart, dass das anorganische Pulver dem sprühgetrockneten pulverförmigen Dispergiermittel bereits im Trockenturm zugemischt werden kann. Eine gemeinsame Sprühtrocknung von anorganischem Pulver und Dispergiermittel wird nicht offenbart.

Aus der JP H06-239652 ist ein Verfahren zur Herstellung von pulverförmigen Dispergiermitteln für zementäre Systeme auf Basis von Polycarboxylatethern und anorganischen Pulvern bekannt. Als anorganische Pulverkomponente wird unter anderem Bentonit offenbart. Die Trocknung erfolgt durch Sprühtrocknung, wobei das anorganische Pulver bereits bei der Sprühtrocknung zugegeben wird. Eine anorganischen Komponente entsprechend der vorliegenden Erfindung, umfassend mindestens ein Schichtsilikat, welches eine ganzzahlige Schichtladung von 0, 1 oder 2 aufweist, wird nicht offenbart.

Die CN 101962273 hat sich die Aufgabe gestellt ein Verfahren zur Herstellung eines pulverförmigen Dispergiermittels bereitzustellen, wobei das erhaltene Produkt eine sehr geringe Verbackungsneigung aufweist. Hinsichtlich dieses Verfahrens wird ein feines anorganisches Pulver oder Sol mit einer Lösung eines Polycarboxylsäurepolymers gemischt. Die Mischung wird anschließend zerstäubt und das Wasser in einer Trockenkammer entzogen. Gleichzeitig werden anorganische Hilfsstoffe als Antibackmittel zugesetzt. Nachteilig ist hierbei jedoch, dass die hergestellten Pulver bei ihrer Anwendung eine deutlich schlechtere Wirkungsentfaltung, im Vergleich zu einer Lösung des Polycarboxylsäurepolymers, aufweisen.

Aus der WO 2006/027363 ist ein Verfahren zur Herstellung eines beschichteten Grundstoffs für eine hydraulische Zusammensetzung bekannt. In den Beispielen wird unter anderem die Beschichtung eines Portlandzements mit 1 % einer wässrigen Polycarboxylatether-Lösung, bezogen auf das Bindemittelgewicht, offenbart.

Aufgrund ihrer physikalischen Eigenschaften lassen sich viele polymere Dispergiermittel nur schwer in Pulverform überführen und werden deshalb in Form ihrer wässrigen Lösung angeboten. Für viele Anwendungen, beispielsweise Trockenmörtel, ist es aber unerlässlich Dispergiermittel in fester Form zur Verfügung zu stellen. Generell bestand deshalb Bedarf ein Verfahren zur Verfügung zu stellen, mit welchem sich polymere Dispergiermittel in Feststoffe umwandeln lassen, wobei die anwendungstechnischen Eigenschaften, insbesondere die Wirkungsentfaltung bei der Anwendung, soweit wie möglich denen der wässrigen Lösung des polymeren Dispergiermittels entsprechen sollten.

Aufgabe der vorliegenden Erfindung war es demzufolge, ein Dispergiermittel in Form eines Feststoffs zur Verfügung zu stellen, welches sehr gute Pulvereigenschaften aufweist, wobei diese Eigenschaften insbesondere unter thermischer und mechanischer Belastung erhalten bleiben. Gleichzeitig sollte das Dispergiermittel bei seinem Einsatz in Form eines Feststoffs, beispielsweise in einer anorganischen Bindemittelzusammensetzung, so weit wie möglich in seiner Wirkung und Wirkungsentfaltung der wässrigen Lösung dieses Dispergiermittels entsprechen.

Gelöst wurde diese Aufgabe durch ein Verfahren zur Herstellung eines Dispergiermittels, umfassend die Schritte
a) Bereitstellen mindestens eines wasserlöslichen Polymers, umfassend Polyethergruppen,
b) Bereitstellen einer anorganischen Komponente, umfassend mindestens ein Schichtsilikat, welches eine ganzzahlige Schichtladung von 0, 1 oder 2 aufweist,
c) Herstellung einer wässrigen Suspension, umfassend das mindestens eine wasserlösliche Polymer, umfassend Polyethergruppen und die anorganische Komponente, umfassend das mindestens eine Schichtsilikat,
d) Sprühtrocknung der wässrigen Suspension unter Erhalt eines Feststoffs. Überraschend hat sich hierbei ergeben, dass nicht nur die gestellte Aufgabe in vollem Umfang gelöst werden konnte, sondern dass die pulverförmige Zusammensetzung auch ausgezeichnete Verarbeitungseigenschaften aufweist.

Überraschend wurde auch gefunden, das eine pulverförmige Mischung, umfassend das nach dem erfindungsgemäßen Verfahren erhaltene Dispergiermittel, zu einer sehr ähnlichen zeitlichen Entfaltung der dispergierenden Wirkung des Polymers nach Zugabe von Anmachwasser führt, verglichen mit der Zugabe des Dispergiermittels im Anmachwasser.

Die wasserlöslichen Polymere entsprechend der vorliegenden Erfindung enthalten bevorzugt mindestens zwei Monomerbausteine. Es kann aber auch vorteilhaft sein, Copolymere mit drei oder mehr Monomerbausteinen zu verwenden.

Besonders bevorzugt umfasst das wasserlösliche Polymer mindestens eine Gruppe aus der Reihe Carboxyester-, Carboxy-, Phosphono-, Sulfino-, Sulfo-, Sulfamido-, Sulfoxy-, Sulfoalkyloxy-, Sulfinoalkyloxy und Phosphonooxygruppe. Insbesondere bevorzugt umfasst das Polymer eine Säuregruppe. Unter dem Begriff "Säuregruppe" wird in der vorliegenden Anmeldung sowohl die freie Säure als auch deren Salze verstanden. Bevorzugt kann es sich bei der Säure um mindestens eine aus der Reihe Carboxy-, Phosphono-, Sulfino-, Sulfo-, Sulfamido-, Sulfoxy-, Sulfoalkyloxy-, Sulfinoalkyloxy und Phosphonooxygruppe handeln. Besonders bevorzugt sind Carboxy- und Phosphonooxygruppen. In einer weiterhin besonders bevorzugten Ausführungsform umfasst das wasserlösliche Polymer mindestens eine Carboxyestergruppe, wobei es sich insbesondere um einen Hydroxyalkylester handelt. Die Alkylgruppe der Hydroxyalkylester umfasst bevorzugt 1 bis 6, bevorzugt 2 bis 4 C-Atome.

Unter "wasserlösliche Polymere" im Sinne der vorliegenden Anmeldung werden Polymere verstanden, welche in Wasser bei 20 °C und Normaldruck eine Löslichkeit von mindestens 1 Gramm pro Liter, insbesondere mindestens 10 Gramm pro Liter und besonders bevorzugt von mindestens 100 Gramm pro Liter aufweisen.

In einer bevorzugten Ausführungsform handelt es sich bei den Polyethergruppen des mindestens einen wasserlöslichen Polymers um Polyethergruppen der Struktureinheit (I),

*-U-(C(O))ₖ-X-(AlkO)ₙ-W (I)

wobei
- *: die Bindungsstelle an das Polymer anzeigt,
- U: für eine chemische Bindung oder eine Alkylengruppe mit 1 bis 8 C-Atomen steht,
- X: Sauerstoff, Schwefel oder eine Gruppe NR¹ bedeutet,
- k: 0 oder 1 ist,
- n: für eine ganze Zahl steht, deren Mittelwert, bezogen auf das Polymer im Bereich von 3 bis 300 liegt,
- Alk: für C₂-C₄-Alkylen steht, wobei Alk innerhalb der Gruppe (Alk-O)ₙ gleich oder verschieden sein kann,
- W: einen Wasserstoff-, einen C₁-C₆-Alkyl- oder einen Arylrest bedeutet oder die Gruppe Y-F bedeutet, wobei
- Y: für eine lineare oder verzweigte Alkylengruppe mit 2 bis 8 C-Atomen steht, die einen Phenylring tragen kann,
- F: für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe R² aufweisen können, und wobei 1 oder 2 Kohlenstoffringglieder als Carbonylgruppe vorliegen können,
- R¹: für Wasserstoff, C₁-C₄-Alkyl oder Benzyl steht, und
- R²: für Wasserstoff, C₁-C₄-Alkyl oder Benzyl steht.

In einer besonders bevorzugten Ausführungsform stellt das wasserlösliche Polymer, umfassend Polyethergruppen, ein Polykondensationsprodukt dar, enthaltend
(II) eine einen Aromaten oder Heteroaromaten und die Polyethergruppe aufweisende Struktureinheit sowie
(III) eine phosphatierte einen Aromaten oder Heteroaromaten aufweisende Struktureinheit.

Die Struktureinheiten (II) und (III) werden bevorzugt durch folgende allgemeine Formeln repräsentiert

(II) A-U-(C(O))ₖ-X-(AlkO)ₙ-W

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen; 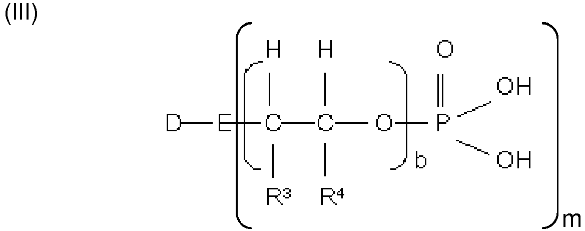 mit
D gleich oder verschieden sowie repräsentiert durch eine substituierte oder unsubstituierte aromatische oder heteroaromatische Verbindung mit 5 bis 10 C-Atomen im aromatischen System.

Weiterhin ist E gleich oder verschieden sowie repräsentiert durch N, NH oder O, m = 2 falls E = N und m = 1 falls E = NH oder O.

R³ und R⁴ sind unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H, bevorzugt durch H, Methyl, Ethyl oder Phenyl, besonders bevorzugt durch H oder Methyl und insbesondere bevorzugt durch H. Weiterhin ist b gleich oder verschieden sowie repräsentiert durch eine ganze Zahl von 0 bis 300. Falls b = 0 ist E = O. Besonders bevorzugt ist D = Phenyl, E = O, R³ und R⁴ = H und b = 1.

Bevorzugt enthält das Polykondensationsprodukt eine weitere Struktureinheit (IV), welche durch folgende Formel repräsentiert wird 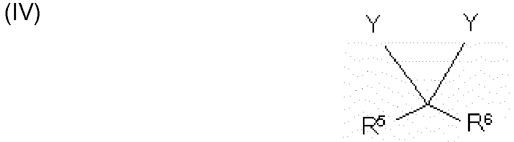 mit
Y unabhängig voneinander gleich oder verschieden und repräsentiert durch (II), (III) oder weitere Bestandteile des Polykondensationsproduktes.

R⁵ und R⁶ sind bevorzugt gleich oder verschieden und repräsentiert durch H, CH₃, COOH oder eine substituierte oder unsubstituierte aromatische oder heteroaromatische Verbindung mit 5 bis 10 C-Atomen. Hierbei werden R⁵ und R⁶ in Struktureinheit (IV) unabhängig voneinander bevorzugt durch H, COOH und/oder Methyl repräsentiert. In einer besonders bevorzugten Ausführungsform werden R⁵ und R⁶ durch H repräsentiert.

Das molare Verhältnis der Struktureinheiten (II), (III) und (IV) des phosphatierten Polykondensationsproduktes kann in weiten Bereichen variiert werden. Als zweckmäßig hat es sich erwiesen, dass das Molverhältnis der Struktureinheiten [(II) + (III)] : (IV) 1 : 0,8 bis 3, bevorzugt 1 : 0,9 bis 2 und besonders bevorzugt 1: 0,95 bis 1,2 beträgt.

Das Molverhältnis der Struktureinheiten (II) : (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert. Bevorzugt wird n in Struktureinheit (I) durch eine ganze Zahl von 5 bis 280, insbesondere 10 bis 160 und besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium-, Ammonium- und/oder Calcium-Salz und bevorzugt um ein Natrium- und/oder Kalium-Salz, des phosphatierten Polykondensationsproduktes handelt.

Häufig weist das phosphatierte Polykondensationsprodukt ein gewichtsmittleres Molekulargewicht von 5000 g/mol bis 150.000 g/mol, vorzugsweise 10.000 bis 100.000 g/mol und besonders bevorzugt 20.000 bis 75.000 g/mol auf. Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen.

In einer weiteren bevorzugten Ausführungsform handelt es sich bei dem wasserlöslichen Polymer um mindestens ein Copolymer, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst und
(VI) mindestens ein ethylenisch ungesättigtes Monomer umfassend die Polyethergruppe, wobei die Polyethergruppe bevorzugt durch die Struktureinheit (I) repräsentiert wird.

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (V) durch mindestens eine der folgenden allgemeinen Formeln aus der Gruppe (Va), (Vb) und (Vc) repräsentiert:

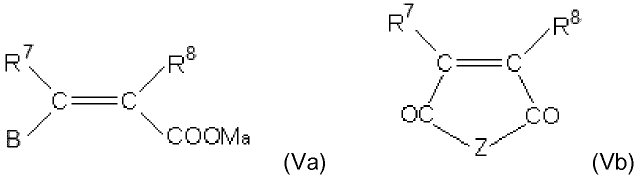

Bei dem Mono- oder Dicarbonsäure-Derivat (Va) und dem in cyclischer Form vorliegenden Monomer (Vb), wobei Z = O (Säureanhydrid) oder NR¹⁶ (Säureimid) darstellen, steht R⁷ und R⁸ unabhängig voneinander für Wasserstoff oder einen aliphatischen Kohlenwasserstoffrest mit 1 bis 20 C-Atomen, vorzugsweise eine Methylgruppe. B bedeutet H, -COOMₐ, -CO-O(C_{q}H_{2q}O)ᵣ-R⁹, -CO-NH-(C_{q}H_{2q}O)ᵣ-R⁹.

M bedeutet Wasserstoff, ein ein-, zwei- oder dreiwertiges Metallkation, vorzugsweise Natrium-, Kalium-, Calcium- oder Magnesium-Ion, weiterhin Ammonium oder ein organischer Aminrest sowie a = 1/3, 1/2 oder 1, je nachdem, ob es sich bei M um ein ein-, zwei- oder dreiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R⁹ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2, 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.
Weiterhin steht Z für O oder NR¹⁶, wobei R¹⁶ unabhängig voneinander gleich oder verschieden sowie repräsentiert wird durch einen verzweigten oder unverzweigten C₁- bis C₁₀-Alkylrest, C₅- bis C₈-Cycloalkylrest, Arylrest, Heteroarylrest oder H.

Die folgende Formel stellt das Monomer (Vc) dar:

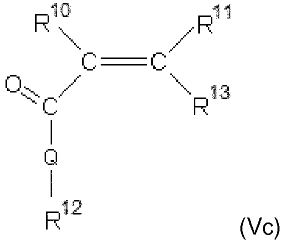

Hierbei steht R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen.

Weiterhin ist R¹² gleich oder verschieden und wird durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n = 0, 1, 2, 3 oder 4, (C₆H₄)-SO₃H, (C₆H₄)-PO₃H₂, (C₆H₄)-OPO₃H₂ und (CₙH₂ₙ)-NR¹⁴_{b} mit n = 0, 1, 2, 3 oder 4 und b durch 2 oder 3 repräsentiert.
R¹³ bedeutet H, -COOMₐ, -CO-O(C_{q}H_{2q}O)ᵣ-R⁹, -CO-NH-(C_{q}H_{2q}O)ᵣ-R⁹, wobei Mₐ, R⁹, q und r die oben genannte Bedeutungen besitzen.

R¹⁴ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Weiterhin ist Q gleich oder verschieden sowie repräsentiert durch NH, NR¹⁵ oder O, wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.
In einer besonders bevorzugten Ausführungsform wird das ethylenisch ungesättigte Monomer (VI) durch folgende allgemeine Formeln repräsentiert 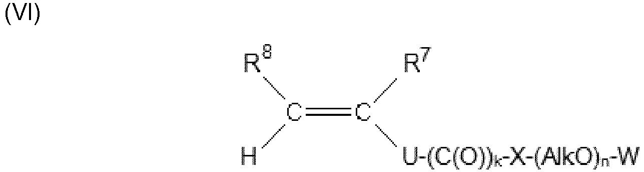 worin alle Reste die oben genannten Bedeutungen aufweisen.

Insbesondere weist das Copolymer ein mittleres Molgewicht (Mw) zwischen 5000 und 150.000 g/mol, besonders bevorzugt 10,000 bis 80,000 g/mol und ganz besonders bevorzugt 15,000 bis 60,000 g/mol auf, welches durch Gelpermeationschromatographie bestimmt wird.
Die Polymere werden mittels Größenausschlusschromatographie auf mittlere Molmasse und Umsatz analysiert (Säulenkombinationen: Shodex OH-Pak SB 804 HQ und OH-Pak SB 802.5 HQ von Showa Denko, Japan; Elutionsmittel: 80 Vol.-% wässrige Lösung von HCO₂NH₄ (0,05 mol/l) und 20 Vol.-% MeOH; Injektionsvolumen 100 µl; Flussrate 0,5 ml/min)).

Vorzugsweise erfüllt das Copolymer die Anforderungen der Industrienorm EN 934-2 (Februar 2002).

Die Sprühtrocknung, auch Zerstäubungstrocknung genannt, ist ein Verfahren zur Trocknung von Lösungen, Suspensionen oder pastösen Massen. Mittels einer Düse, welche in der Regel durch den Flüssigkeitsdruck, Pressluft oder Inertgas betrieben wird oder rotierenden Zerstäuberscheiben (4.000-50.000 Umdrehungen/min) wird das zu trocknende Gut in einen Heißluftstrom eingebracht, der es in sehr kurzer Zeit zu einem feinen Pulver trocknet. Je nach Bauart oder Verwendungszweck ist es möglich, dass die Heißluft in Richtung mit dem Sprühstrahl strömt, also nach dem Gleichstromprinzip oder gegen den Sprühstrahl, also nach dem Gegenstromprinzip. Die Sprüheinrichtung befindet sich bevorzugt am oberen Teil eines Sprühturms. Das anfallende Trockengut wird hierbei insbesondere durch einen Zyklonabscheider vom Luftstrom getrennt und kann dort entnommen werden. Es ist weiterhin bekannt, Sprühtrockner kontinuierlich oder diskontinuierlich zu betreiben.

Zur Durchführung des erfindungsgemäßen Verfahrens eigenen sich im Prinzip alle herkömmlichen Sprühvorrichtungen.

Geeignete Sprühdüsen sind Einstoffdüsen sowie Mehrkanaldüsen wie Zweistoffdüsen, Dreikanaldüsen oder Vierkanaldüsen. Solche Düsen können auch als sogenannte "Ultraschalldüsen" ausgestaltet sein. Derartige Düsen sind kommerziell erhältlich.

Weiterhin kann je nach Düsentyp auch ein Zerstäubungsgas zugeführt werden. Als Zerstäubungsgas kann Luft oder ein Inertgas wie Stickstoff oder Argon eingesetzt werden. Der Gasdruck des Zerstäubungsgases kann bis zu 1 MPa absolut, vorzugsweise 0,12 bis 0,5 MPa absolut betragen.

In einer bevorzugten Ausführungsform wird die Herstellung der wässrigen Suspension, umfassend das mindestens eine wasserlösliche Polymer, umfassend Polyethergruppen und die anorganische Komponente, umfassend das mindestens eine Schichtsilikat vor dem Sprühtrocknungsschritt d) durchgeführt. Bevorzugt wird hierbei die erfindungsgemäß eingesetzte wässrige Suspension durch Mischen einer wässrigen Lösung des Polymers mit der anorganischen Komponente, umfassend das mindestens eine Schichtsilikat hergestellt. Die anorganische Komponente kann hierbei als Feststoff und insbesondere in Form eines Pulvers vorliegen. Alternativ ist es aber auch möglich die anorganische Komponente als Suspension einzusetzen.

Gemäß einer weiteren Ausführungsform eignen sich auch spezielle Düsen, in denen verschiedene flüssige Phasen innerhalb des Düsenkörpers vermischt und dann zerstäubt werden. Hierbei können eine wässrige Lösung oder eine wässrige Suspension umfassend das mindestens eine wasserlösliche Polymer, umfassend Polyethergruppen sowie eine wässrige Suspension umfassend die anorganische Komponente, umfassend das mindestens eine Schichtsilikat, der Düse zunächst getrennt zugeführt werden und anschließend innerhalb des Düsenkopfes miteinander gemischt werden.

Eine Ausführungsform der Erfindung betrifft Ultraschalldüsen. Ultraschalldüsen können mit oder ohne Zerstäubungsgas betrieben werden. Bei Ultraschalldüsen erfolgt die Zerstäubung dadurch, dass die zu zerstäubende Phase in Schwingungen versetzt wird. Je nach Düsengröße und Ausführung können die Ultraschalldüsen mit einer Frequenz von 16 bis 120 kHz betrieben werden.

Der Durchsatz an zu versprühender Flüssigphase pro Düse richtet sich nach der Düsengröße. Der Durchsatz kann 500 g/h bis 1000 kg/h Lösung oder Suspension betragen. Bei der Herstellung kommerzieller Mengen liegt der Durchsatz vorzugsweise im Bereich von 10 bis 1000 kg/h.

Wenn kein Zerstäubungsgas verwendet wird, so kann der Flüssigkeitsdruck 0,2 bis 40 MPa absolut betragen. Wird ein Zerstäubungsgas verwendet so kann die Flüssigkeit drucklos zugeführt werden.

Weiterhin wird der Sprühtrocknungsvorrichtung ein Trocknungsgas wie Luft oder eines der erwähnten Inertgase zugeführt. Das Trocknungsgas kann im Gleich- oder im Gegenstrom zu der versprühten Flüssigkeit zugeführt werden, vorzugsweise im Gleichstrom. Die Eingangstemperatur des Trocknungsgases kann 120 bis 300 °C, vorzugsweise 150 bis 230 °C betragen, die Ausgangstemperatur 60 bis 135 °C.

Wie bereits erwähnt, richten sich die Größenordnungen der zu verwendenden Sprühparameter wie Durchsatz, Gasdruck oder Düsendurchmesser entscheidend nach der Größe der Vorrichtungen. Die Vorrichtungen sind kommerziell erhältlich und üblicherweise werden vom Hersteller entsprechende Größenordnungen empfohlen.

Erfindungsgemäß wird das Sprühverfahren vorzugsweise so betrieben, dass die mittlere Tropfengröße der versprühten Phasen 5 bis 2.000 µm, bevorzugt 5 bis 500 µm, besonders bevorzugt 5 bis 200 µm, beträgt. Die mittlere Tropfengröße kann mittels Laserbeugung oder Hochgeschwindigkeitskameras gekoppelt mit einer Bildauswertung ermittelt werden.
Die vorstehenden Ausführungen zum Sprühverfahren können auf alle nachfolgend geschilderten bevorzugten und besonders bevorzugten Ausführungsformen angewendet werden. Bevorzugte Sprühparameter sind auch im Zusammenhang mit den nachstehenden Ausführungsformen bevorzugt.

Eine besondere Ausführungsform ist ein Verfahren bei welchem die Sprühdüse eine Mehrkanaldüse ist.

In einer alternativen Ausführungsform erfolgt das Versprühen der Komponenten durch eine Mehrkanaldüse, wobei die Komponenten am Ausgang der Sprühdüse miteinander in Kontakt gebrachten werden.
Bevorzugt kann die Mehrkanaldüse eine Dreikanaldüse oder auch eine Zweikanaldüse sein. Im Fall der Dreikanaldüse wird bei einem der drei Kanäle bevorzugt ein Zerstäubergas, besonders bevorzugt Luft oder Stickstoff, eingesetzt, die anderen beiden Kanäle sind I) eine wässrige Lösung oder eine wässrige Suspension umfassend das mindestens eine wasserlösliche Polymer, umfassend Polyethergruppen sowie II) eine wässrige Suspension umfassend die anorganische Komponente, umfassend das mindestens eine Schichtsilikat. Im Fall einer Zweikanaldüse wird die erforderliche Zerstäubung der Komponenten I) und II) entweder durch den Einsatz von Ultraschall erzielt oder durch den Einsatz einer Zentrifugalkraftdüse.
Bevorzugt ist der Einsatz einer Dreikanaldüse mit einem Kanal für das Zerstäubergas und zwei Kanälen für die Komponenten I) und II). Die Kanäle für die Komponenten I) und II) sind sowohl im Fall einer Zweikanaldüse, als auch einer Dreikanaldüse getrennt um eine vorzeitige Vermischung der Komponenten zu vermeiden. Die Komponenten I) und II) werden erst am Austritt der beiden Kanäle für die Komponenten I) und II) der
Sprühdüse miteinander in Kontakt gebracht. Das Zerstäubergas bewirkt die Bildung feiner Tröpfchen (eine Art Nebel) aus den miteinander in Kontakt gebrachten Komponenten I) und II).

Bevorzugt ist jedoch ein Verfahren bei dem die Mehrkanaldüse zwei Kanäle besitzt, wobei die Komponente I), eine wässrige Lösung oder eine wässrige Suspension umfassend das mindestens eine wasserlösliche Polymer, umfassend Polyethergruppen sowie die Komponente II) umfassend die anorganische Komponente, umfassend das mindestens eine Schichtsilikat, zunächst miteinander vorgemischt werden und anschließende der Zweikanaldüse zugeführt werden, wobei über den zweiten Kanal das Trocknungsgas eingetragen wird.

In einer weiterhin bevorzugten Ausführungsform der Erfindung umfasst die wässrige Suspension, vor der Sprühtrocknung, 1 bis 55 Gew.-%, vorzugsweise 5 bis 30 Gew.-% des wasserlöslichen Polymers, umfassend Polyethergruppen und 6 bis 75 Gew.-%, vorzugsweise 15 bis 60 Gew.-% der anorganischen Komponente, umfassend das mindestens eine Schichtsilikat sowie 20 bis 80 Gew.-%, vorzugsweise 35 bis 75 Gew.-% Wasser.

Im Rahmen der vorliegenden Erfindung ist es bevorzugt, wenn die wässrige Suspension in Verfahrensschritt c) vor dem Eintritt in den Sprühtrockner hergestellt und vorgewärmt wird. In einer alternativen Ausführungsform können auch die Komponenten I) und II) unabhängig voneinander vor dem Eintritt in den Sprühtrockner vorgewärmt werden. Die Einlasstemperatur der Komponente I) und unabhängig hiervon der Komponente II) oder die Einlasstemperatur der Mischung in den Sprühtrockner kann zwischen 50 und 200 °C, bevorzugt zwischen 70 und 130 °C betragen. Der erhaltene pulverförmige Feststoff kann im Anschluss zum Entfernen von Agglomeraten gesiebt werden. In einer bevorzugten Ausführungsform wird der nach dem erfindungsgemäßen Verfahren erhaltenen Feststoff in Form eines trockenen Pulvers erhalten, welches eine gute Fließfähigkeit besitzt.

Das Pulver kann aber auch beispielsweise durch Druck in eine andere feste Form umgewandelt werden. Weiterhin ist es möglich die erhaltenen Pulver mit den üblichen Verfahren zu granulieren. Somit umfasst das erfindungsgemäße Verfahren auch feste Dispergiermittel in der Form von Pellets oder Granulaten. Das erfindungsgemäße Verfahren sieht somit bevorzugt vor, dass der nach der Sprühtrocknung erhaltene Feststoff als Pulver oder Granulat vorliegt.

Bevorzugt werden die Einsatzmengen in Schritt a) und b) so gewählt, dass der nach der Sprühtrocknung erhaltene Feststoff
5 bis 70 Gew.-%, bevorzugt 15 bis 60 Gew.-% und insbesondere bevorzugt 20 bis 40 Gew.-% des mindestens einen wasserlöslichen Polymers, umfassend Polyethergruppen und
30 bis 95 Gew.-%, bevorzugt 30 bis 85 Gew.-% und insbesondere bevorzugt 50 bis 80 Gew.-% des mindestens einen Schichtsilikats umfasst.

Die in dem erfindungsgemäßen Verfahren eingesetzte wässrige Suspension kann auch weitere Additive enthalten. In einer alternativen Ausführungsform können die Komponenten I) und II) unabhängig voneinander weitere Additive enthalten. Hierbei kann es sich insbesondere um Stabilisierer oder Nebenprodukte aus dem Herstellungsprozess handeln. Zum Beispiel können Salze, insbesondere Puffersalze, Alkohole, Polysaccharide, Sulfonatsalze, Antischaummittel, Polyether, Luftporenbildner, Verzögerer, Beschleuniger, Hydrophobierungsmittel und Schwundreduzierer enthalten sein. Weiterhin können insbesondere Antioxidationsmittel oder Stabilisierer als Additive zugesetzt werden, wobei es sich bevorzugt um Stabilisierer handelt, welche in der WO 00/17263 von Seite 4, Zeile 4 bis Seite 9 Zeile 22 offenbart sind. Insbesondere kann es sich bei dem Stabilisierer um ein unter dem Markennamen Additin der Rhein Chemie GmbH vertriebenes Produkt handeln, insbesondere Additin RC 7135. Vorzugsweise beträgt der Gehalt an Additiven, bezogen auf das sprühgetrocknete Produkt, unter 10 Gew.-%, besonders bevorzugt unter 5 Gew.-% und insbesondere weniger als 3 Gew.-%.

Der nach dem erfindungsgemäßen Verfahren erhaltene Feststoff hat nach Suspension in Wasser (50 Gew.-%ige Suspension) bevorzugt einen pH-Wert zwischen 2 und 9 vorzugsweise zwischen 3,5 und 6,5. In einer speziellen Ausführungsform ist es auch möglich den pH-Wert der erfindungsgemäß eingesetzten wässrigen Suspension vor der Sprühtrocknung durch Zugabe einer Säure oder einer Base einzustellen. Erfindungsgemäß wird mindestens ein Schichtsilikat eingesetzt, welches eine ganzzahlige Schichtladung von 0, 1 oder 2 aufweist. Unter Schichtsilikate im Sinne der vorliegenden Erfindung werden Silikate verstanden, deren Silikatanionen in Schichten eckenverknüpfter SiO₄-Tetraeder vorliegen. Diese Schichten oder Doppelschichten sind untereinander nicht über weitere Si-O-Bindungen zu Gerüsten verknüpft. Die Schichten können hierbei weitere Elemente umfassen, insbesondere Aluminium, Eisen und/oder Magnesium.

In einer bevorzugten Ausführungsform handelt es sich bei dem mindestens einen Schichtsilikat um ein Tonmineral. Hierunter werden Schichtsilikate verstanden, welche neben den Tetraederschichten mit eckenverknüpften SiO₄-Tetraeder weiterhin Oktaederschichten aus kantenverknüpften AlO₆-Oktaedern umfassen. Die Schichten können hierbei weitere Elemente umfassen. Insbesondere bevorzugt können in der Tetraederschicht die Siliziumatome zum Teil durch Aluminium ersetzt sein und in der Oktaederschicht können die Aluminiumatome zum Teil durch Magnesium ersetzt sein. Bevorzugt handelt es sich bei dem mindestens einen Schichtsilikat um ein 1:1 Tonmineral mit einer Schichtladung von 0.

Insbesondere kann es sich bei dem mindestens einen Schichtsilikat um Talk, echten Glimmer und Kaolinit handeln. Hinsichtlich des echten Glimmers ist es besonders bevorzugt, wenn es sich um Muskovit handelt. Weiterhin besonders bevorzugt handelt es sich bei dem Schichtsilikat um Kaolinit. Insbesondere kann die anorganische Komponente in Schritt b) Kaolin umfassen und insbesondere aus Kaolin bestehen.

Die anorganische Komponente b) weist bevorzugt eine durch Laserdiffraktometrie bestimmte mittlere Teilchengröße (d50%) zwischen 100 nm und 2000 nm auf.

Durch die Sprühtrocknung kann ein sehr feines Pulver erhalten werden. Vorzugsweise ist die Teilchengröße des sprühgetrockneten Pulvers, bezogen auf mindestens 98% der Teilchen, unter 1000 µm, vorzugsweise unter 750 µm insbesondere bevorzugter unter 500 µm. Die Teilchengröße wird hierbei durch Laserdiffraktometrie bestimmt. Zur Bestimmung der Teilchengröße eignet sich beispielsweise das Gerät Mastersizer 2000 der Malvern Instruments Ltd.

In einer bevorzugten Ausführungsform ist die mittlere Partikelgröße (d50%) zwischen 50 und 150 µm, bevorzugt zwischen 70 und 125 µm. Weiterhin wird ein Dispergiermittel beschrieben, welches nach dem erfindungsgemäßen Verfahren erhalten wird.

Weiterhin beschrieben wird die Verwendung des Dispergiermittels, welches nach dem erfindungsgemäßen Verfahren erhaltenen wurde, in einer anorganischen Bindemittelzusammensetzung vor.

Bevorzugt handelt es sich bei dem anorganischen Bindemittel um mindestens eines aus der Reihe Zement auf Basis Portlandzement, Weißzement, Calciumaluminatzement, Calciumsulfoaluminatzement, Calciumsulfat-n-Hydrat und latent hydraulisches bzw. puzzolanisches Bindemittel.

Bei der Bindemittelzusammensetzung, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches bspw. Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

Bei dem Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen oder Auskleidungsmörtel (z. B. für Trinkwasserrohre) handeln.

Ebenso eingeschlossen sind Werkmörtel, welche bei der Herstellung auf der Baustelle außer mit Wasser auch noch mit weiteren Komponenten, insbesondere flüssigen und/oder pulverförmigen Additiven und/oder mit Gesteinskörnung versehen werden können (Zweikomponenten Systeme).

Bei der Bindemittelzusammensetzung, welche mindestens ein anorganisches Bindemittel aufweist, kann es sich bei dem Bindemittel insbesondere auch um ein Bindemittelgemisch handeln. Darunter werden im vorliegenden Zusammenhang Gemische aus mindestens zwei Bindemitteln aus der Reihe Zement, puzzolanisches und/oder latent hydraulisches Bindemittel, Weißzement, Spezialzement, Calciumaluminatzement, Calciumsulfoaluminatzement und die verschiedenen wasserhaltigen und wasserfreien Calciumsulfate verstanden. Diese können dann ggf. noch weitere Additive enthalten.

Die nachfolgenden Beispiele sollen die Erfindung näher erläutern.

### Beispiele

### Polymere

Polymer 1 ist ein Copolymer aus Hydroxyethylacrylat und ethoxyliertem Isoprenol mit 23 Ethylenoxid-Einheiten (EO). Das Molekulargewicht (Mw) beträgt 20000 g/mol. Das Copolymer wurde wie folgt hergestellt: Ein Glas-Reaktor wurde mit einem Rührwerk, pH-Meter und Dosiereinheiten bestückt und mit 267 g Wasser befüllt. 330 g des geschmolzenen ethoxylierten Isoprenols wurden mit dem Wasser vermischt. Die Temperatur wurde auf 13°C, der pH-Wert durch Zugabe von 25%-iger Schwefelsäure auf ca. 7 eingestellt. Dazu wurden 4 mg Eisen-(II)-sulfat-Heptahydrat, 8,25 g Mercaptoethanol und 3,2 g Wasserstoffperoxid gegeben. Anschließend wurden eine Lösung aus 200 g Wasser und 136 g Hydroxyethylacrylat sowie 5 g Brüggolit E01 und 32 g Wasser über einen Zeitraum von 20 Minuten zugegeben. Während der Reaktion wurde der pH-Wert durch Zugabe von 50%-iger NaOH auf pH = 7 gehalten

Polymer 2 ist ein Copolymer aus zwei ethoxylierten Isoprenolen mit unterschiedlicher Kettenlänge der Ethylenoxid-Einheiten (23 EO und 10 EO im Molverhältnis 1/1) und Acrylsäure. Das Copolymer wurde wie folgt hergestellt: Ein Glasreaktor ausgestattet mit mehreren Zulaufmöglichkeiten, Rührer und Tropftrichter wurde mit 143 ml Wasser und 115 g Macromonomer 1 (hergestellt durch Ethoxylierung von 3-methyl-3-buten-1-ol mit 23 mol EO) sowie 50 g Macromonomer 2 (hergestellt durch Ethoxylierung von 3-methyl-3-buten-1-ol mit 10 EO) beschickt (Lösung A) und auf 15,4 °C temperiert. Eine Teilmenge der zweiten vorbereiteten, teilneutralisierten Lösung (Lösung B), bestehend aus 61,05 g Wasser und 12,28 g Acrylsäure (90 Gew.-%) wurde über einen Zeitraum von 15 Minuten in den Glasreaktor zu Lösung A gegeben. Weiterhin wurden 1,11 g 3-Mercaptopropionsäure in den Reaktor gegeben. Eine 3. Lösung (Lösung C), bestehend aus 3 g Natriumhydroxymethansulfinat-dihydrat und 47 g Wasser wurde vorbereitet. Anschließend wurden bei einer Temperatur von 15,4 °C 46,5 mg Eisen-(II)-sulfat-Heptahydrat, gelöst in einigen Tropfen Wasser, sowie 2,87 g 30 %ige Wasserstoffperoxidlösung zu Lösung A gegeben. Des Weiteren wurden über 45 Minuten die noch verbliebene Lösung B und über 50 Minuten Lösung C in die Lösung A dosiert. Zum Abschluss wurden - 25 ml 20 %ige Natriumhydroxid-Lösung zugegeben und ein pH-Wert von 6,5 eingestellt.

Das Molekulargewicht wurde mittels Gelpermeationschromatographie (GPC) mit folgender Methode bestimmt: Säulenkombination: Shodex OH-Pak SB 804 HQ und OH-Pak SB 802.5 HQ von Showa Denko, Japan; Elutionsmittel: 80 Vol.-% wässrige Lösung von HCO₂NH₄ (0,05 mol/l) und 20 Vol.-% MeOH; Injektionsvolumen 100 µl; Flussrate 0,5 ml/min). Die Kalibration des Molekulargewichts wurde mit Standards von PSS Polymer Standard Service, Deutschland, durchgeführt. Für den UV-Detektor wurden Poly(Styrol-sulfonat) Standards, für den RI-Detektor Poly(ethylenoxid) Standards verwendet. Um das Molekulargewicht zu bestimmen wurden die Ergebnisse des RI-Detektors verwendet.

### Sprühtrocknung

Es wurde eine 40 Gew.-%ige wässrige Suspension aus dem jeweiligen Trägermaterial hergestellt. Unter starkem Rühren wurde das Polymer als 40 Gew.-%ige wässrige Lösung zugegeben.

Zur Trocknung der Suspensionen wurde ein Sprühtrockner der Firma GEA Niro vom Typ Mobile Minor Typ MM-I verwendet. Getrocknet wurde mit Hilfe einer Zweistoffdüse im Kopf des Turms. Die Trocknung wurde mit Stickstoff, der im Gleichstrom mit dem Trocknungsgut von oben nach unten eingeblasen wurde getrocknet. Getrocknet wurde mit 80 kg/h Trocknungsgas. Die Temperatur des Trocknungsgases betrug am Turmeingang 220°C. Die Zulaufgeschwindigkeit des Trocknungsgutes wurde so eingestellt das die Ausgangstemperatur des Trocknungsgases am Turmausgang 100°C betrug. Das aus dem Trocknungsturm, mit dem Trocknungsgas, ausgeschleuste Pulver wurde mit Hilfe eines Zyklons vom Trocknungsgas getrennt.

Die Sprühtrockenbarkeit wurde wie folgt beurteilt:

**Tabelle 1**

| **Wertung** | **Beschreibung** |
|---|---|
| 1 | Feines, staubartiges Pulver im Probenglas unterhalb des Zyklon; Rohrleitungen und Zyklon nur staubartig benetzt; evtl. feine pulverartige Ablagerungen im Konus des Trockenturms |
| 2 | Feines Pulver (d(90) Teilchengröße < 500 µm) im Probenglas unterhalb des Zyklon; nur leichte Ablagerungen in Zyklon und Rohrleitungen; evtl. feine pulverartige Ablagerungen im Konus des Trockenturms |
| 3 | Gröberes Pulver (d(90) Teilchengröße > 500 µm) im Probenglas unterhalb des Zyklon, Ablagerungen in Zyklon und Rohrleitungen; nach 10 Sekunden mixen des Pulvers im Grindomix GM 200 von RETSCH bei 8000 Umdrehungen/min erhält man eine Probe mit Teilchengrößen d(99) < 500 µm. |
| 4 | Evtl. wenige gröbere Brocken im Probenglas unterhalb des Zyklon, Probe größtenteils im Trocknerturm, starke Verkrustungen in Rohrleitungen; nach 10 Sekunden mixen im Grindomix GM 200 von RETSCH bei 8000 Umdrehungen/min Probe erhält man eine Probe mit Teilchengrößen d(80) < 500 µm |
| 5 | Leeres evtl. wachsartig benetztes Probenglas unterhalb des Zyklon, Probe größtenteils als wachsartige Beschichtung in Trocknerturm und Rohrleitungen |

Die Korngröße wurde mit einem "Mastersizer 2000" von Malvern Instruments bestimmt. Es handelt sich um den Volumetrischen Korndurchmesser.

Das verwendete Kalksteinmehl (Handelsname "Omyacarb 15" der Omya AG) besitzt einen durchschnittlichen Partikeldurchmesser von 12 µm. Bei Kaolin handelt es sich um das Handelsprodukt "ASP 602" der BASF SE. Der durchschnittliche Partikeldurchmesser liegt bei 0,6 µm. Bentonit wurde von Sigma Aldrich bezogen. Bei dem kolloidalen Silika handelt es sich um das Handelsprodukt Bindzil 40/170 der Kurt Obermeier GmbH & Co. KG (40 Gew.-%, durchschnittliche Teilchengröße 20 nm).

Die thermisch-mechanischen Eigenschaften des Pulvers wurden wie folgt getestet: Alle benötigten Metallteile wurden vor Nutzung im Trockenschrank auf 80°C erwärmt. Ein Messing-Rohr mit einer Länge von 70 mm und einem Innendurchmesser von 50 mm bei einer Wandstärke von 2,5 mm wurde auf eine Messing-Bodenplatte mit einem 7 mm hohen Rohraufsatz bei 55 mm Innendurchmesser gestellt. In das Rohr wurden 2 g Pulver gegeben, ein Messing-Zylinder mit 1558 g Gewicht wurde anschließend in das Rohr eingesetzt. Dieser Zylinder wurde ohne Druck 10 mal um 360° gedreht. Anschließend wurde der Zylinder und das Rohr entfernt und die Probe anhand der folgenden Faktoren eingestuft:

**Tabelle 2**

| **Wertung** | **Beschreibung** |
|---|---|
| 1 | Probe liegt weiter als Pulver vor |
| 2 | Probe liegt als kompaktiertes Pulver vor, kann mit Finger oder Spatel ohne Kraftaufwand zerteilt werden |
| 3 | Probe kompaktiert, Kraftaufwand nötig um Probe zu zerteilen, evtl. leicht klebrig |
| 4 | Probe liegt wachsartig vor; erst weiche Klumpen, nach abkühlen harte Klumpen |

Es wurden folgende Pulver hergestellt:

**Tabelle 3**

| Pulver | Polymer | Träger [% des Gesamtgewichts] | Beurteilung A | Beurteilung B |
|---|---|---|---|---|
| 1 | 1 | Kalksteinmehl [80%] | 5 | 3 |
| 2 | 1 | Bentonit [80%] | 2 | 2 |
| 3 | 1 | Kaolin [80%] | 2 | 2 |
| 4 | 1 | Acrylsäure/Methacrylsäure/Methallylsulfonsäure (1/1/0,2) Copolymer [80%] | 2 | 2 |
| 5 | 1 | Kolloidales Silika [80%] | 2 | 2 |
| 6 | 2 | Kaolin [80%] | 2 | 2 |
| 7 | 2 | Bentonit [80%] | 2 | 2 |
| V1 | 1 | - | 5 | 4 |
| V2 | 2 | - | 5 | 4 |

| | | | | |
|---|---|---|---|---|
| Beurteilung A: Sprühtrockenbarkeit Beurteilung B: nach thermischer/mechanischer Belastung V1: Vergleich 1 V2: Vergleich 2 Erfindungsgemäß sind die Pulver 3 und 6. | | | | |

Die so erhaltenen Pulver wurden auf Ihre Anwendbarkeit im Trockenmörtel getestet: Der Zementmörtel setzte sich aus 50,0 Gew.-% Portlandzement (CEM I 52,5 N, Milke) und 50,0 Gew.-% Normsand (DIN EN 196-1) zusammen. Der Wasserzementwert, auch als w/z-Wert bezeichnet, welcher das Gewichtsverhältnis von Wasser zu Zement angibt, betrug 0,30. Zur Verflüssigung des Zementmörtels wurde ein Pulver nach Tabelle 3 oder als Vergleich Polymer 1 oder Polymer 2 als 40 %ige wässrige Lösung zugegeben. Der Gehalt des wasserlöslichen Polymers betrug jeweils 2 Gew.-% bezogen auf die Zementmenge.
Die Herstellung des Zementmörtels erfolgte in Anlehnung an DIN EN 196-1:2005 in einem Mörtelmischer mit einem Fassungsvermögen von ca. 5 Liter. Zum Anmischen wurden Wasser, Pulver oder die wässrige Lösung des Polymers nach Tabelle 3 und Zement in den Mischbehälter gegeben. Unmittelbar danach wurde der Mischvorgang mit niedriger Geschwindigkeit der Wirbler (140 Umdrehungen pro Minute (U/min)) gestartet. Nach 30 Sekunden wurde der Normsand gleichmäßig innerhalb von 30 Sekunden der Mischung zugegeben. Danach wurde der Mischer auf eine höhere Geschwindigkeit umgeschaltet (285 U/min) und das Mischen für weitere 30 Sekunden fortgesetzt. Anschließend wurde der Mischer für 90 Sekunden angehalten. Während der ersten 30 Sekunden wurde der Zementmörtel, der an der Wand und am unteren Teil der Schüssel klebte, mit einem Gummischrapper entfernt und in die Mitte der Schüssel gegeben. Nach der Pause wurde der Zementmörtel für weitere 60 Sekunden bei der höheren Mischgeschwindigkeit gemischt. Die Gesamtmischzeit betrug 4 Minuten.

Unmittelbar nach Ende des Mischvorgangs wurde von allen Proben das Fließmaß mit dem Hägermann-Konus ohne Zuführung von Verdichtungsenergie in Anlehnung an die SVB-Richtlinie des Deutschen Ausschusses für Stahlbeton (siehe hierzu: Deutscher Ausschuss für Stahlbetonbau (Hrsg.): DAfStb - Richtlinie Selbstverdichtender Beton (SVB-Richtlinie) Berlin, 2003) bestimmt. Der Hägermann-Konus (d oben = 70 mm, d unten = 100 mm, h = 60 mm) wurde mittig auf einer trockenen Glasplatte mit einem Durchmesser von 400 mm platziert und bis zur vorgesehenen Höhe mit Zementmörtel befüllt. Unmittelbar nach dem Ausnivellieren bzw. 5 Minuten nach dem ersten Kontakt von Zement und Wasser wurde der Hägermann-Konus abgezogen, zum Abtropfen 30 Sekunden über dem auseinander fließenden Zementmörtel gehalten und dann entfernt. Sobald das Fließmaß zum Stillstand kam, wurde der Durchmesser mit einem Messschieber an zwei rechtwinklig zueinander liegenden Achsen bestimmt und der Mittelwert berechnet. Um die zeitliche Entwicklung des Fließmaßes zu charakterisieren wurde die Prüfung nach 10, 20, 30, 45, 60, 90 und 120 Minuten wiederholt. Vor jeder Prüfung wurde der Zementmörtel für 10 Sekunden im Mörtelmischer mit einer Geschwindigkeit von 140 Umdrehungen pro Minute (U/min) aufgemischt.

Die Erstarrungsende wurde am Zementleim analog DIN EN 196-3 mit einem Nadelgerät nach Vicat bestimmt.

**Tabelle 4**

| Versuch | Fließmaß | | | | | Erstarrungsende |
|---|---|---|---|---|---|---|
| | 10 min | 20 min | 30 min | 45 min | 60 min | |
| Pulver 1 | 10 cm | 10 cm | 10 cm | 11 cm | 14 cm | 246 min |
| Pulver 2 | 10 cm | 10 cm | 10 cm | 10 cm | 10 cm | 295 min |
| Pulver 3 | 10 cm | 10 cm | 11 cm | 17 cm | 22 cm | 245 min |
| Pulver 4 | 10 cm | 10 cm | 15 cm | 23 cm | 28 cm | 586 min |
| Pulver 5 | 10 cm | 10 cm | 10 cm | 14 cm | 16 cm | 247 min |
| Pulver 6 | 30 cm | 30 cm | 31 cm | 31 cm | 32 cm | |
| Pulver 7 | 10 cm | 10 cm | 10 cm | 10 cm | 10 cm | |
| Polymer 1 | 10 cm | 10 cm | 11 cm | 17 cm | 22 cm | 245 min |
| Polymer 2 | 30 cm | 30 cm | 31 cm | 31 cm | 32 cm | |

| | | | | | | |
|---|---|---|---|---|---|---|
| Polymer 1 und Polymer 2 wurden als 40 %ige wässrige Lösung zudosiert | | | | | | |

Tabelle 4 ist zu entnehmen, dass nur das erfindungsgemäße Pulver 3 (Polymer 1) eine Wirkungsentfaltung bezüglich des Fließmaßes entsprechend der wässrigen Lösung des Polymers 1 und weiterhin das erfindungsgemäße Pulver 6 (Polymer 2) eine Wirkungsentfaltung entsprechend der wässrigen Lösung des Polymers 2 aufweist. Die Verwendung anderer Träger, wie etwa Bentonit (Pulver 2, vgl. JP H06-239652), führt hingegen zu einem deutlich unterschiedlichen Wirkungsentfaltung bezüglich des Fließmaßes.

Um weitere Vorteile der erfindungsgemäßen Pulver gegenüber Pulvern nach dem Stand der Technik darzustellen, wurden in Analogie zu Pulver 3 (siehe Tabelle 3) Vergleichsversuche durchgeführt. Hierzu wurde in Versuch V3 aus der gleichen Menge an wasserfreiem Rohmaterial eine Mischung des anorganischen Pulvers (Kaolin) mit dem im Vakuum getrockneten harzartigen Dispergiermittel hergestellt (vgl. DE 199 05 488). Die erhaltene Mischung wurde vermahlen, um eine Korngröße zu erhalten, welche mit Pulver 3 vergleichbar ist.

In einem weiteren Versuch V4 wurde das anorganische Pulver (Kaolin) bei der Sprühtrocknung im Trockenturm zugegeben (vgl. JP 2001294463). Hierbei wurde trockenes Kaolin über einen Stickstoffstrom in den oberen Teil der Sprühturms dosiert. Teile des Kaolins adsorbierten auf der sich bildenden pastösen Masse, der Großteil des Kaolins wurde jedoch über den Zyklon des Sprühtrockners ausgetragen. Das Polymer blieb aber im Trocknerturm oder den abführenden Rohren oder im Zyklon zurück.

**Tabelle 5**

| Pulver | Polymer | Träger [% des Gesamtgewichts] | Beurteilung A | Beurteilung B |
|---|---|---|---|---|
| 3 | 1 | Kaolin [80%] | 2 | 2 |
| V3 | 1 | Kaolin [80%] | - | 3 |
| V4 | 1 | Kaolin [80%] | 5 | pastös |

Bei der Bestimmung der Verklumpungsneigung der Pulverprodukte wurde eine mit einem Sieb mit 500 µm Maschenweite vorgesiebte Pulvermenge unter 7,5 kg Last für 10 Tage im Trockenschrank bei 40°C und anschließend der ggf. entstandene Grobanteil im Pulver durch sieben über ein Sieb mit 1000 µm Maschenweite bestimmt.

**Tabelle 6**

| **Pulver** | |
|---|---|
| | **Siebrückstand** |
| 3 | 0,5 g |
| V3 | 7,2 g |

## Patentansprüche

1. Verfahren zur Herstellung eines Dispergiermittels, umfassend die Schritte
a) Bereitstellen mindestens eines wasserlöslichen Polymers, umfassend Polyethergruppen,
b) Bereitstellen einer anorganischen Komponente, umfassend mindestens ein Schichtsilikat, welches eine ganzzahlige Schichtladung von 0, 1 oder 2 aufweist,
c) Herstellung einer wässrigen Suspension, umfassend das mindestens eine wasserlösliche Polymer, umfassend Polyethergruppen und die anorganische Komponente, umfassend das mindestens eine Schichtsilikat,
d) Sprühtrocknung der wässrigen Suspension unter Erhalt eines Feststoffs.

2. Verfahren nach Anspruch 1, **dadurch gekennzeichnet, dass** es sich bei den Polyethergruppen des mindestens einen wasserlöslichen Polymers um Polyethergruppen der Struktureinheit (I),
*-U-(C(O))ₖ-X-(AlkO)ₙ-W (I)
wobei
* die Bindungsstelle an das Polymer anzeigt,
U für eine chemische Bindung oder eine Alkylengruppe mit 1 bis 8 C-Atomen steht,
X Sauerstoff, Schwefel oder eine Gruppe NR¹ bedeutet,
k 0 oder 1 ist,
n für eine ganze Zahl steht, deren Mittelwert, bezogen auf das Polymer im Bereich von 3 bis 300 liegt,
Alk für C₂-C₄-Alkylen steht, wobei Alk innerhalb der Gruppe (Alk-O)ₙ gleich oder verschieden sein kann,
W einen Wasserstoff-, einen C₁-C₆-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R² aufweisen können, und wobei 1 oder 2 Kohlenstoffringglieder als Carbonylgruppe vorliegen können,
R¹ für Wasserstoff, C₁-C₄-Alkyl oder Benzyl steht, und
R² für Wasserstoff, C₁-C₄-Alkyl oder Benzyl steht,
handelt.

3. Verfahren nach Anspruch 1 oder 2, **dadurch gekennzeichnet, dass** das wasserlösliche Polymer mindestens eine Gruppe aus der Reihe Carboxyester-, Carboxy-, Phosphono-, Sulfino-, Sulfo-, Sulfamido-, Sulfoxy-, Sulfoalkyloxy-, Sulfinoalkyloxy und Phosphonooxygruppe umfasst.

4. Verfahren nach Anspruch 1 oder 2, **dadurch gekennzeichnet, dass** das wasserlösliche Polymer, umfassend Polyethergruppen, ein Polykondensationsprodukt darstellt, enthaltend
(II) eine einen Aromaten oder Heteroaromaten und die Polyethergruppe aufweisende Struktureinheit,
(III) eine phosphatierte einen Aromaten oder Heteroaromaten aufweisende Struktureinheit.

5. Verfahren nach Anspruch 4, **dadurch gekennzeichnet, dass** die Struktureinheiten (II) und (III) durch folgende allgemeine Formeln repräsentiert werden
(II) A-U-(C(O))ₖ-X-(AlkO)ₙ-W
mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen; 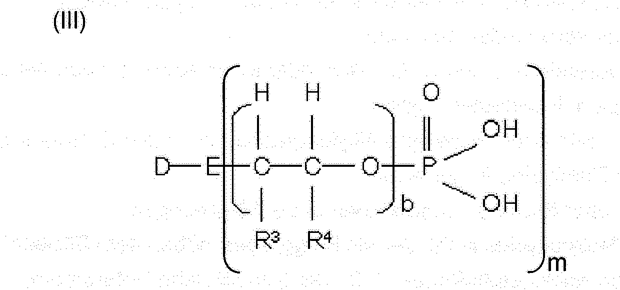
mit
D gleich oder verschieden sowie repräsentiert durch eine substituierte oder unsubstituierte aromatische oder heteroaromatische Verbindung mit 5 bis 10 C-Atomen im aromatischen System
mit
E gleich oder verschieden sowie repräsentiert durch N, NH oder O
mit
m = 2 falls E = N und m = 1 falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
gleich oder verschieden sowie repräsentiert durch eine ganze Zahl von 0 bis 300.

6. Verfahren nach Anspruch 4 oder 5, **dadurch gekennzeichnet, dass** das Polykondensationsprodukt eine weitere Struktureinheit (IV) enthält, welche durch folgende Formel repräsentiert wird 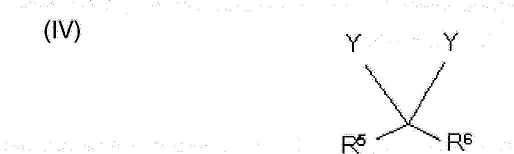 mit
Y unabhängig voneinander gleich oder verschieden und repräsentiert durch (II), (III) oder weitere Bestandteile des Polykondensationsproduktes.

7. Verfahren nach Anspruch 1 oder 2, **dadurch gekennzeichnet, dass** das wasserlösliche Polymer, umfassend Polyethergruppen, mindestens ein Copolymer darstellt, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(VI) mindestens ein ethylenisch ungesättigtes Monomer umfassend die Polyethergruppe.

8. Verfahren nach Anspruch 7, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird 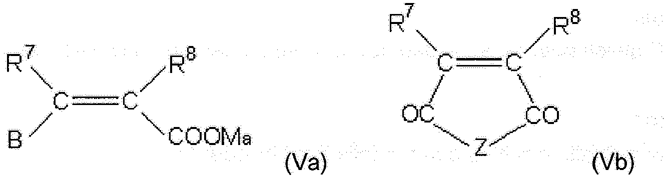 wobei
R⁷ und R⁸ unabhängig voneinander für Wasserstoff oder einen aliphatischen Kohlenwasserstoffrest mit 1 bis 20 C-Atomen
B für H, -COOMₐ, -CO-O(C_{q}H_{2q}O)ᵣR⁹, -CO-NH-(C_{q}H_{2q}O)ᵣ-R⁹
M für Wasserstoff, ein ein-, zwei- oder dreiwertiges Metallkation, Ammoniumion oder einen organischen Aminrest
a für 1/3, 1/2 oder 1
R⁹ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR¹⁶
R¹⁶ unabhängig voneinander gleich oder verschieden sowie repräsentiert durch einen verzweigten oder unverzweigten C₁- bis C₁₀-Alkylrest, C₅-bis C₈-Cycloalkylrest, Arylrest, Heteroarylrest oder H
stehen, 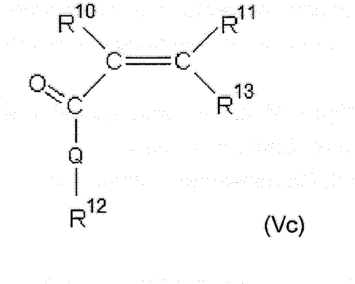 mit
R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
R¹² gleich oder verschieden sowie repräsentiert durch (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und (CₙH₂ₙ)-NR¹⁴_{b} mit n = 0, 1, 2, 3 oder 4 und b = 2 oder 3
R¹³ für H, -COOMₐ, -CO-O(C_{q}H_{2q}O)ᵣ-R⁹, -CO-NH-(C_{q}H_{2q}O)ᵣ-R⁹, wobei Mₐ, R⁹, q und r oben genannte Bedeutungen besitzen
R¹⁴ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, NR¹⁵ oder O; wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

9. Verfahren nach einem der Ansprüche 1 bis 8, **dadurch gekennzeichnet, dass** das mindestens eine wasserlösliche Polymer, umfassend Polyethergruppen, ein mittleres Molgewicht (Mw) zwischen 5000 und 150.000 g/mol aufweist, welches durch Gelpermeationschromatographie bestimmt wird.

10. Verfahren nach einem der Ansprüche 1 bis 9, **dadurch gekennzeichnet, dass** der nach der Sprühtrocknung erhaltene Feststoff als Pulver oder Granulat vorliegt.

11. Verfahren nach einem der Ansprüche 1 bis 10, **dadurch gekennzeichnet, dass** die Einsatzmengen in Schritt a) und b) so gewählt werden, dass der nach der Sprühtrocknung erhaltene Feststoff
| | |
|---|---|
| 5 bis 70 Gew.-% | des mindestens einen wasserlöslichen Polymers, umfassend Polyethergruppen und |
| 30 bis 95 Gew.-% | des mindestens einen Schichtsilikats umfasst, welches eine ganzzahlige Schichtladung von 0, 1 oder 2 aufweist. |

12. Verfahren nach einem der Ansprüche 1 bis 11, **dadurch gekennzeichnet, dass** es sich bei dem mindestens einen Schichtsilikat um ein 1:1 Tonmineral mit einer Schichtladung von 0 handelt.

13. Verfahren nach einem der Ansprüche 1 bis 12, **dadurch gekennzeichnet, dass** b) die anorganische Komponente eine durch Laserdiffraktometrie bestimmte mittlere Teilchengröße (d50%) zwischen 100 nm und 2000 nm aufweist.

## Claims

1. A method for producing a dispersant, comprising the steps of
a) providing at least one water-soluble polymer comprising polyether groups,
b) providing an inorganic component comprising at least one phyllosilicate which has an integral sheet charge of 0, 1 or 2,
c) preparing an aqueous suspension comprising the at least one water-soluble polymer comprising polyether groups and the inorganic component comprising the at least one phyllosilicate,
d) spray-drying the aqueous suspension to give a solid.

2. The method according to claim 1, wherein the polyether groups of the at least one water-soluble polymer are polyether groups of the structural unit (I),
*-U-(C(O))ₖ-X-(AlkO)ₙ-W (I)
where
* indicates the bonding site to the polymer,
U is a chemical bond or an alkylene group having 1 to 8 carbon atoms,
X is oxygen, sulfur or a group NR¹,
k is 0 or 1,
n is an integer whose average value based on the polymer is in the range from 3 to 300,
Alk is C₂-C₄ alkylene, it being possible for Alk to be identical or different within the group (Alk-O)ₙ,
W is a hydrogen, a C₁-C₆ alkyl or an aryl radical or is the group Y-F, where
Y is a linear or branched alkylene group having 2 to 8 carbon atoms and may carry a phenyl ring,
F is a 5- to 10-membered nitrogen heterocycle which is bonded via nitrogen and which as ring members, besides the nitrogen atom and besides carbon atoms, may have 1, 2 or 3 additional heteroatoms, selected from oxygen, nitrogen, and sulfur, it being possible for the nitrogen ring members to have a group R², and for 1 or 2 carbon ring members to be present in the form of a carbonyl group,
R¹ is hydrogen, C₁-C₄ alkyl or benzyl, and
R² is hydrogen, C₁-C₄ alkyl or benzyl.

3. The method according to claim 1 or 2, wherein the water-soluble polymer comprises at least one group from the series consisting of carboxyester, carboxyl, phosphono, sulfino, sulfo, sulfamido, sulfoxy, sulfoalkyloxy, sulfinoalkyloxy, and phosphonooxy group.

4. The method according to claim 1 or 2, wherein the water-soluble polymer comprising polyether groups represents a polycondensation product comprising
(II) a structural unit comprising an aromatic or heteroaromatic and the polyether group,
(III) a phosphated structural unit comprising an aromatic or heteroaromatic.

5. The method according to claim 4, wherein the structural units (II) and (III) are represented by the following general formulae
(II) A-U-(C(O))ₖ-X-(AlkO)ₙ-W
where
A is identical or different and is represented by a substituted or unsubstituted, aromatic or heteroaromatic compound having 5 to 10 carbon atoms in the aromatic system, the other radicals possessing the definition stated for structural unit (I); 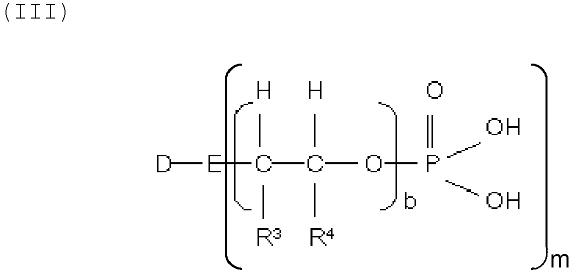 where
D is identical or different and is represented by a substituted or unsubstituted, aromatic or heteroaromatic compound having 5 to 10 carbon atoms in the aromatic system
where
E is identical or different and is represented by N, NH or O
where
m = 2 if E = N and m = 1 if E = NH or O
where
R³ and R⁴ independently of one another are identical or different and are represented by a branched or unbranched C₁ to C₁₀ alkyl radical, C₅ to C₈ cycloalkyl radical, aryl radical, heteroaryl radical or H
where b
is identical or different and is represented by an integer from 0 to 300.

6. The method according to claim 4 or 5, wherein the polycondensation product comprises a further structural unit (IV) which is represented by the following formula 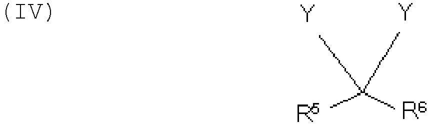 where
Y independently of one another is identical or different and is represented by (II), (III) or further constituents of the polycondensation product.

7. The method according to claim 1 or 2, wherein the water-soluble polymer comprising polyether groups represents at least one copolymer which is obtainable by polymerizing a mixture of monomers comprising
(V) at least one ethylenically unsaturated monomer which comprises at least one radical from the series consisting of carboxylic acid, carboxylic salt, carboxylic ester, carboxylic amide, carboxylic anhydride, and carboxylic imide
and
(VI)at least one ethylenically unsaturated monomer comprising the polyether group.

8. The method according to claim 7, wherein the ethylenically unsaturated monomer (V) is represented by at least one of the following general formulae from the group of (Va), (Vb), and (Vc) 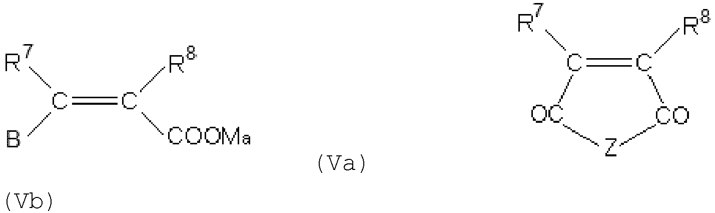 where
R⁷ and R⁸ independently of one another are hydrogen or an aliphatic hydrocarbon radical having 1 to 20 carbon atoms
B is H, -COOMₐ, -CO-O(C_{q}H_{2q}O)ᵣ-R⁹, -CO-NH-(C_{q}H_{2q}O)ᵣ-R⁹
M is hydrogen, a mono-, di- or trivalent metal cation, ammonium ion or an organic amine radical
a is 1/3, 1/2 or 1
R⁹ is hydrogen, an aliphatic hydrocarbon radical having 1 to 20 carbon atoms, a cycloaliphatic hydrocarbon radical having 5 to 8 carbon atoms, an optionally substituted aryl radical having 6 to 14 carbon atoms
q independently of one another for each (C_{q}H_{2q}O) unit is identical or different and is 2, 3 or 4, and
r is 0 to 200
Z is O, NR¹⁶
R¹⁶ independently at each occurrence is identical or different and is represented by a branched or unbranched C₁- to C₁₀-alkyl radical, C₅- to C₈ cycloalkyl radical, aryl radical, heteroaryl radical or H, 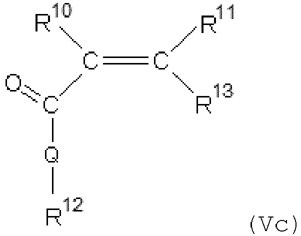
where
R¹⁰ and R¹¹ independently of one another are hydrogen or an aliphatic hydrocarbon radical having 1 to 20 carbon atoms, a cycloaliphatic hydrocarbon radical having 5 to 8 carbon atoms, an optionally substituted aryl radical having 6 to 14 carbon atoms
R¹² is identical or different and is represented by (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n = 0, 1, 2, 3 or 4, (C₆H₄)-SO₃H, (C₆H₄)-PO₃H₂, (C₆H₄)-OPO₃H₂, and (CₙH₂ₙ)-NR¹⁴_{b} where n = 0, 1, 2, 3 or 4 and b = 2 or 3
R¹³ is H, -COOMₐ, -CO-O(C_{q}H_{2q}O)ᵣ-R⁹, -CO-NH-(C_{q}H_{2q}O)ᵣ-R⁹, where Mₐ, R⁹, q, and r possess definitions stated above
R¹⁴ is hydrogen, an aliphatic hydrocarbon radical having 1 to 10 carbon atoms, a cycloaliphatic hydrocarbon radical having 5 to 8 carbon atoms, an optionally substituted aryl radical having 6 to 14 carbon atoms
Q is identical or different and is represented by NH, NR¹⁵ or O; where R¹⁵ is an aliphatic hydrocarbon radical having 1 to 10 carbon atoms, a cycloaliphatic hydrocarbon radical having 5 to 8 carbon atoms, or an optionally substituted aryl radical having 6 to 14 carbon atoms.

9. The method according to any of claims 1 to 8, wherein the at least one water-soluble polymer comprising polyether groups has an average molar weight (Mw) of between 5000 and 150 000 g/mol, as determined by gel permeation chromatography.

10. The method according to any of claims 1 to 9, wherein the solid obtained after spray drying is in the form of powder or granules.

11. The method according to any of claims 1 to 10, wherein the amounts used in steps a) and b) are selected such that the solid obtained after the spray drying comprises
| | |
|---|---|
| 5 to 70 wt% | of the at least one water-soluble polymer comprising polyether groups and |
| 30 to 95 wt% | of the at least one phyllosilicate which has an integral sheet charge of 0, 1 or 2. |

12. The method according to any of claims 1 to 11, wherein the at least one phyllosilicate is a 1:1 clay mineral having a sheet charge of 0.

13. The method according to any of claims 1 to 12, wherein b) the inorganic component has an average particle size (d50%) as determined by laser diffractometry of between 100 nm and 2000 nm.

## Revendications

1. Procédé de préparation d'un agent dispersant, comprenant les étapes de
a) mise à disposition d'au moins un polymère soluble dans l'eau, comprenant des groupes polyéther,
b) mise à disposition d'un composant inorganique, comprenant au moins un silicate stratifié, qui présente une charge stratifiée entière de 0, 1 ou 2,
c) préparation d'une suspension aqueuse comprenant l'au moins un polymère soluble dans l'eau, comprenant des groupes polyéther et le composant inorganique, comprenant l'au moins un silicate stratifié,
d) séchage par pulvérisation de la suspension aqueuse avec obtention d'un solide.

2. Procédé selon la revendication 1, **caractérisé en ce que** les groupes polyéther de l'au moins un polymère soluble dans l'eau sont des groupes polyéther du motif structural (I),
***-U-(C(O))ₖ-X-(AlkO)ₙ-W** **(I)**
* indiquant la position de liaison au polymère,
U représentant une liaison chimique ou un groupe alkylène comportant 1 à 8 atomes de C,
X signifiant oxygène, soufre ou un groupe NR¹,
k étant 0 ou 1,
n représentant un nombre entier dont la moyenne, par rapport au polymère, se situe dans la plage de 3 à 300,
Alk représentant C₂₋₄-alkylène, Alk pouvant être identique ou différent dans le groupe (Alk-O)ₙ,
W signifiant un radical hydrogène, un radical C₁₋₆-alkyle ou un radical aryle ou signifiant le groupe Y-F,
Y représentant un groupe alkylène linéaire ou ramifié comportant 2 à 8 atomes de C, qui peut porter un cycle phényle,
F représentant un hétérocycle azoté de 5 à 10 chaînons lié par l'intermédiaire de l'azote, qui peut présenter en tant qu'éléments cycliques, outre l'atome d'azote et outre les atomes de carbone, 1, 2 ou 3 hétéroatomes supplémentaires choisis parmi l'oxygène, l'azote et le soufre, les azotes de cycle pouvant présenter un groupe R², et 1 ou 2 carbones de cycle pouvant être présents en tant que groupe carbonyle,
R¹ représentant hydrogène, C₁₋₄-alkyle ou benzyle, et
R² représentant hydrogène, C₁₋₄-alkyle ou benzyle.

3. Procédé selon la revendication 1 ou 2, **caractérisé en ce que** le polymère soluble dans l'eau comprend au moins un groupe de la série des groupes carboxyester, carboxy, phosphono, sulfino, sulfo, sulfamido, sulfoxy, sulfoalkyloxy, sulfinoalkyloxy et phosphonooxy.

4. Procédé selon la revendication 1 ou 2, **caractérisé en ce que** le polymère soluble dans l'eau, comprenant des groupes polyéther, représente un produit de polycondensation, contenant
(II) un motif structural présentant un composé aromatique ou hétéroaromatique et le groupe polyéther,
(III) un motif structural phosphaté présentant un composé aromatique ou hétéroaromatique.

5. Procédé selon la revendication 4, **caractérisé en ce que** les motifs structuraux (II) et (III) sont représentés par les formules générales suivantes
(II) **A-U-(C(O))ₖ-t-X-(AlkO)ₙ-W**
A étant identique ou différent ainsi que représenté par un composé aromatique ou hétéroaromatique substitué ou non substitué comportant 5 à 10 atomes de C dans le système aromatique, les autres radicaux possédant la signification mentionnée pour le motif structural (I) ; 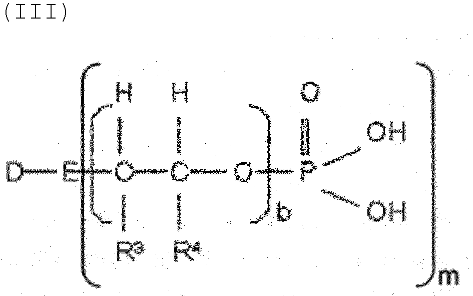
D étant identique ou différent ainsi que représenté par un composé aromatique ou hétéroaromatique substitué ou non substitué comportant 5 à 10 atomes de C dans le système aromatique
E étant identique ou différent ainsi que représenté par N, NH ou O
m = 2 au cas où E = N et m = 1 au cas où E = NH ou O
R³ et R⁴ étant, indépendamment l'un de l'autre, identiques ou différents ainsi que représentés par un radical C₁₋₁₀-alkyle ramifié ou non ramifié, un radical C₅₋₈-cycloalkyle, un radical aryle, un radical hétéroaryle ou H
b étant identique ou différent ainsi que représenté par un nombre entier de 0 à 300.

6. Procédé selon la revendication 4 ou 5, **caractérisé en ce que** le produit de polycondensation contient un autre motif structural (IV), qui est représenté par la formule suivante 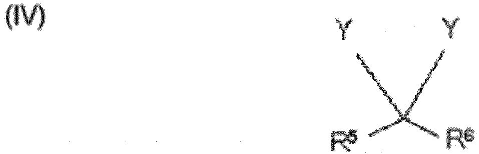 Y étant, indépendamment l'un de l'autre, identique ou différent et représenté par (II), (III) ou d'autres ingrédients du produit de polycondensation.

7. Procédé selon la revendication 1 ou 2, **caractérisé en ce que** le polymère soluble dans l'eau, comprenant des groupes polyéther, représente au moins un copolymère qui peut être obtenu par polymérisation d'un mélange de monomères, comprenant
(V) au moins un monomère éthyléniquement insaturé, qui comprend au moins un radical de la série acide carboxylique, sel d'acide carboxylique, ester d'acide carboxylique, amide d'acide carboxylique, anhydride d'acide carboxylique et imide d'acide carboxylique
et
(VI) au moins un monomère éthyléniquement insaturé comprenant le groupe polyéther.

8. Procédé selon la revendication 7, **caractérisé en ce que** le monomère éthyléniquement insaturé (V) est représenté par au moins l'une des formules générales suivantes du groupe (Va), (Vb) et (Vc) 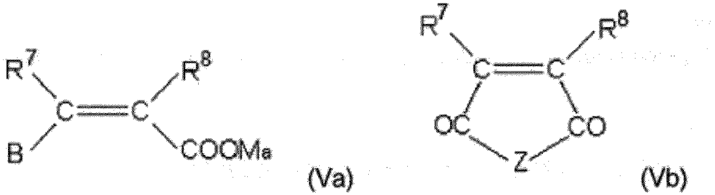
R⁷ et R⁸ représentant indépendamment l'un de l'autre hydrogène ou un radical hydrocarboné aliphatique comportant 1 à 20 atomes de C
B représentant H, -COOMₐ, -CO-O(C_{q}H_{2q}O)ᵣ-R⁹, -CO-NH-(C_{q}H_{2q}O)ᵣ-R⁹
M représentant hydrogène, un cation métallique monovalent, divalent ou trivalent, un ion ammonium ou un radical amine organique
a représentant 1/3, 1/2 ou 1
R⁹ représentant hydrogène, un radical hydrocarboné aliphatique comportant 1 à 20 atomes de C, un radical hydrocarboné cycloaliphatique comportant 5 à 8 atomes de C, un radical aryle éventuellement substitué comportant 6 à 14 atomes de C
q, identique ou différent, représentant indépendamment l'un de l'autre, pour chaque motif (C_{q}H_{2q}O), 2, 3 ou 4 et
r représentant 0 à 200
Z représentant O, NR¹⁶
R¹⁶ identique ou différent, représentant indépendamment l'un de l'autre un radical C₁₋₁₀-alkyle ramifié ou non ramifié, un radical C₅₋₈-cycloalkyle, un radical aryle, un radical hétéroaryle ou H, 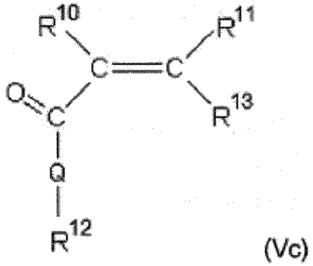
R¹⁰ et R¹¹ représentant indépendamment l'un de l'autre hydrogène ou un radical hydrocarboné aliphatique comportant 1 à 20 atomes de C, un radical hydrocarboné cycloaliphatique comportant 5 à 8 atomes de C, un radical aryle éventuellement substitué comportant 6 à 14 atomes de C
R¹² identique ou différent, représentant (CₙH₂ₙ) -SO₃H avec n = 0, 1, 2, 3 ou 4, (CₙH₂ₙ) -OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et (CₙH₂ₙ)-NR¹⁴_{b} avec n = 0, 1, 2, 3 ou 4 et b = 2 ou 3
R¹³ représentant H, -COOMₐ, -CO-O(C_{q}H_{2q}O)ᵣ-R⁹, -CO-NH-(C_{q}H_{2q}O)ᵣ-R⁹, Mₐ, R⁹, q et r possédant des significations mentionnées ci-dessus
R¹⁴ représentant hydrogène, un radical hydrocarboné aliphatique comportant 1 à 10 atomes de C, un radical hydrocarboné cycloaliphatique comportant 5 à 8 atomes de C, un radical aryle éventuellement substitué comportant 6 à 14 atomes de C,
Q identique ou différent, représentant NH, NR¹⁵ ou O ; R¹⁵ représentant un radical hydrocarboné aliphatique comportant 1 à 10 atomes de C, un radical hydrocarboné cycloaliphatique comportant 5 à 8 atomes de C ou un radical aryle éventuellement substitué comportant 6 à 14 atomes de C.

9. Procédé selon l'une quelconque des revendications 1 à 8, **caractérisé en ce que** l'au moins un polymère soluble dans l'eau, comprenant des groupes polyéther, présente un poids molaire moyen (Mw) compris entre 5 000 et 150 000 g/mole, qui est déterminé par chromatographie à perméation de gel.

10. Procédé selon l'une quelconque des revendications 1 à 9, **caractérisé en ce que** le solide obtenu après le séchage par pulvérisation est présent en tant que poudre ou en tant que granule.

11. Procédé selon l'une quelconque des revendications 1 à 10, **caractérisé en ce que** les quantités introduites dans l'étape a) et b) sont choisies de telle manière que le solide obtenu après le séchage par pulvérisation comprend
| | |
|---|---|
| 5 à 70 % en poids | de l'au moins un polymère soluble dans l'eau, comprenant des groupes polyéther et |
| 30 à 95 % en poids | de l'au moins un silicate stratifié, qui présente une charge stratifiée entière de 0, 1 ou 2. |

12. Procédé selon l'une quelconque des revendications 1 à 11, **caractérisé en ce que** l'au moins un silicate stratifié est un minéral argileux 1 : 1 doté d'une charge stratifiée de 0.

13. Procédé selon l'une quelconque des revendications 1 à 12, **caractérisé en ce que** b) le composant inorganique présente une taille moyenne de particule (d50%), déterminée par diffractométrie laser, comprise entre 100 nm et 2 000 nm.
